# EUROPEAN PATENT APPLICATION

(11) **EP 4 794 066 A1**
(43) Date of publication of application: **19.08.2026**
(21) Application number: 26154318.5
(22) Date of filing: 27.01.2026
(51) Int. Cl.: H01M 50/103, H01M 50/15, H01M 50/176, H01M 50/533, H01M 50/54, H01M 50/55, H01M 50/553, H01M 50/209

(54) **SECONDARY BATTERY, SECONDARY BATTERY MANUFACTURING METHOD, AND BATTERY MODULE**

(30) Priority: 13.02.2025 KR 20250018911
(71) Applicant: SAMSUNG SDI CO., LTD., Yongin-si, Gyeonggi-do 17084 (KR)
(72) Inventor: Lee, Ju Hyeon, 16678 Gyeonggi-do, Suwon-si (KR); Lee, Young Jin, 16678 Gyeonggi-do, Suwon-si (KR); Chae, Hee Dong, 16678 Gyeonggi-do, Suwon-si (KR); Jeon, Du Seong, 16678 Gyeonggi-do, Suwon-si (KR)
(74) Representative: Meissner Bolte Partnerschaft mbB

(57) **Abstract**

A secondary battery includes a case, an electrode assembly inside the case, a cap plate coupled to the case, the cap plate sealing the case, a tab member extending from the electrode assembly in a first direction, a terminal protruding outward from the cap plate, the terminal facing the tab member, a support plate in the tab member in a second direction intersecting the first direction, and a connecting member between the tab member and the terminal, the connecting member connecting the tab member and the terminal.

## Description

### BACKGROUND

### 1. Field

The present invention relates to a secondary battery, a secondary battery manufacturing method, and a battery module.

### 2. Description of the Related Art

In general, due to the recent proliferation of electronic devices using batteries, such as mobile phones, notebook computers, and electric vehicles, the demand for secondary batteries having high energy density and high capacity has rapidly increased. Accordingly, research and development for improving the performance of a lithium secondary battery are being actively conducted.

A lithium secondary battery is a battery including a positive electrode and a negative electrode including an active material capable of intercalating and deintercalating lithium ions, and an electrolyte solution, and generates energy through oxidation/reduction reactions when lithium ions are intercalated/deintercalated at the positive and negative electrodes.

The above-described information disclosed in the technology that forms the background of the present invention is only intended to improve understanding of the background of the present invention, and thus may include information that does not constitute the related art.

### SUMMARY OF THE INVENTION

The present invention concerns a secondary battery, including a case, an electrode assembly inside the case, a cap plate coupled to the case, the cap plate sealing the case, a tab member extending from the electrode assembly in a first direction, a terminal protruding outward from the cap plate, the terminal facing the tab member, a support plate in the tab member in a second direction intersecting the first direction, and a connecting member between the tab member and the terminal, the connecting member connecting the tab member and the terminal.

The secondary battery may further include a plurality of insertion holes passing through the tab member in the second direction, wherein the support plate may include a first support plate on an outside of the plurality of insertion holes, and a plurality of second support plates extending from the first support plate, the plurality of second support plates being in the insertion holes.

The first support plate may be between the electrode assembly and the cap plate.

The tab member may include a bent portion bent in a direction opposite to the second direction, and the first support plate and an end of the bent portion both face the electrode assembly in the first direction.

The plurality of insertion holes and the plurality of second support plates may be in a third direction intersecting the first direction and the second direction.

The connecting member may include a plurality of first connecting plates connected to the terminal, and a plurality of second connecting plates connected to the plurality of first connecting plates and the tab member.

The plurality of first connecting plates and the plurality of second connecting plates may be alternated in a third direction intersecting the first direction and the second direction.

The terminal may include a first terminal surface facing the tab member and a second terminal surface opposite to the first terminal surface, and each of the plurality of first connecting plates may include a terminal connecting portion spaced apart from the tab member, the terminal connecting portion being in contact with the first terminal surface of the terminal, and an extension portion extending from the terminal connecting portion, the extension portion being connected to one of the plurality of second connecting plates.

The terminal connecting portion may have a flat plate shape perpendicular to the first direction.

The terminal connecting portion may include a first terminal connecting portion spaced apart from the first terminal surface of the terminal, and a second terminal connecting portion between the first terminal connecting portion and the first terminal surface of the terminal, the second terminal connecting portion being in contact with the first terminal surface of the terminal.

The plurality of second connecting plates may be between the cap plate and the tab member, the plurality of second connecting plates being in contact with the tab member.

Each of the plurality of second connecting plates may face a different second support plate of the plurality of second support plates in the first direction.

The terminal may include a first terminal surface facing the tab member, a second terminal surface opposite to the first terminal surface, and a plurality of grooves concavely shaped from the second terminal surface toward the first terminal surface.

Each of the plurality of grooves may face a different first connecting plate of the plurality of first connecting plates in the first direction.

The tab member may include a pair of tab members, one of the pair of tab members may be connected to a first electrode of the electrode assembly, and another of the pair of tab members may be connected to a second electrode of the electrode assembly.

According to further aspect the invention concerns a secondary battery manufacturing method, including inserting a support plate into a tab member extending from an electrode assembly in a first direction, seating a connecting member on the tab member, connecting the tab member, the support plate, and the connecting member, seating a terminal on the connecting member, and connecting the connecting member and the terminal.

The secondary battery manufacturing method may further include, before or after inserting the support plate into the tab member, forming a bent portion by bending the tab member.

In inserting the support plate into the tab member, the support plate may be inserted into the tab member in a second direction intersecting the first direction, and in forming the bent portion by bending the tab member, the tab member may be bent in a direction opposite to the second direction.

After inserting the support plate into the tab member and forming the bent portion by bending the tab member, an end of the bent portion may be disposed to face the electrode assembly in the first direction.

According to a further aspect the invention concerns a battery module, including a housing, and a plurality of secondary batteries disposed inside the housing, wherein each of the plurality of secondary batteries includes a case, an electrode assembly inside the case, a cap plate coupled to the case, the cap plate sealing the case, a tab member extending from the electrode assembly in a first direction, a terminal protruding outward from the cap plate, the terminal facing the tab member, a support plate in the tab member in a second direction intersecting the first direction, and a connecting member between the tab member and the terminal, the connecting member connecting the tab member and the terminal.

### BRIEF DESCRIPTION OF THE DRAWINGS

Features will become apparent to those of ordinary skill in the art by describing in detail exemplary embodiments with reference to the attached drawings, in which:
FIG. 1 is a perspective view schematically illustrating a configuration of a battery module according to an embodiment of the present invention;
FIG. 2 is a perspective view schematically illustrating a configuration of a secondary battery according to an embodiment of the present invention;
FIG. 3 is an exploded perspective view schematically illustrating the configuration of the secondary battery according to an embodiment of the present invention;
FIG. 4 is a view schematically illustrating a configuration of an electrode assembly according to an embodiment of the present invention;
FIG. 5 is a cross-sectional view schematically illustrating a configuration of a terminal, a support plate, and a connecting member according to an embodiment of the present invention;
FIG. 6 is a side cross-sectional view schematically illustrating the configuration of the terminal, the support plate, and the connecting member according to an embodiment of the present invention;
FIG. 7 is a flowchart illustrating the sequence of a method of manufacturing the secondary battery according to an embodiment of the present invention;
FIGS. 8 to 15 are views illustrating a process of manufacturing the secondary battery according to an embodiment of the present invention;
FIG. 16 is a flowchart schematically illustrating a modified example of the method of manufacturing the secondary battery illustrated in FIG. 7;
FIGS. 17 and 18 are views schematically illustrating a process of the method of manufacturing the secondary battery illustrated in FIG. 16;
FIG. 19 is an exploded perspective view schematically illustrating a configuration of a secondary battery according to another embodiment of the present invention; and
FIG. 20 is a cross-sectional view schematically illustrating the configuration of the secondary battery according to another embodiment of the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term.

The embodiments described in this specification and the configurations shown in the drawings are provided as some example embodiments of the present invention and do not represent all of the technical ideas, aspects, and features of the present invention. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present invention and are not intended to limit the present invention.

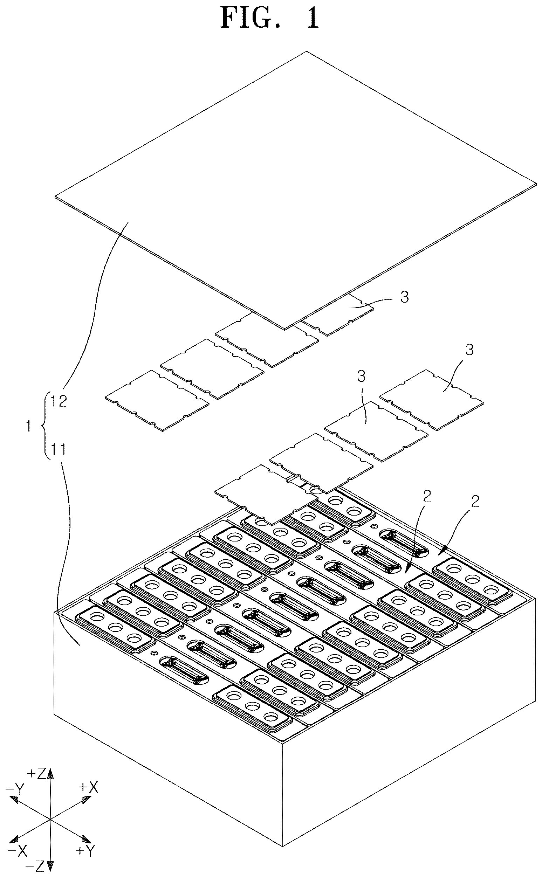

FIG. 1 is a perspective view schematically illustrating a configuration of a battery module according to an embodiment of the present invention.

Referring to FIG. 1, the battery module according to the present embodiment may include a housing 1 and a secondary battery 2.

The housing 1 may form an approximate exterior of the battery module and may provide a space in which the secondary battery 2 may be accommodated.

The housing 1 according to the present embodiment may include a housing body 11 and a cover 12.

The housing body 11 may be formed to have the shape of a box with an empty interior and one open side. A cross-sectional shape of the housing body 11 may be other than the quadrangle illustrated in FIG. 1, and the design thereof may be changed to various shapes such as a polygonal, circular, or oval shape.

The cover 12 may be connected to the housing body 11, and may close the internal space of the housing body 11. As one example, the cover 12 may be formed to have an approximately plate-shaped form and may be disposed to face the open side of the housing body 11. The cover 12 may be fixed to the housing body 11 (e.g., to seal the housing body 11) by various types of coupling methods such as bolting, welding, fitting, or the like.

The secondary battery 2 may function as a unit structure that stores and supplies electrical power in the battery module. The secondary battery 2 may be disposed inside the housing 1.

A plurality of the secondary battery 2 may be provided. The plurality of the secondary battery 2 may be arranged in two or more rows in at least one of a longitudinal direction (an X-axis direction based on FIG. 1) or a width direction (a Y-axis direction based on FIG. 1) of the housing 1. The plurality of the secondary battery 2 may be disposed parallel to each other. The design of the number of the secondary battery 2 may be changed in various ways depending on the size, shape, or the like of the housing 1.

The plurality of the secondary battery 2 may be electrically connected by bus bars 3.

The bus bars 3 according to the present embodiment may be disposed between the cover 12 and the secondary battery 2. Each of the bus bars 3 may connect a pair of neighboring of the secondary battery 2 in series or parallel.

The bus bars 3 may be formed of an electrically conductive material such as copper, aluminum, nickel, or the like. The specific shape of the bus bars 3 may be other than that shown in FIG. 1, and the design thereof may be changed to various shapes that may electrically connect neighboring ones of the secondary battery 2.

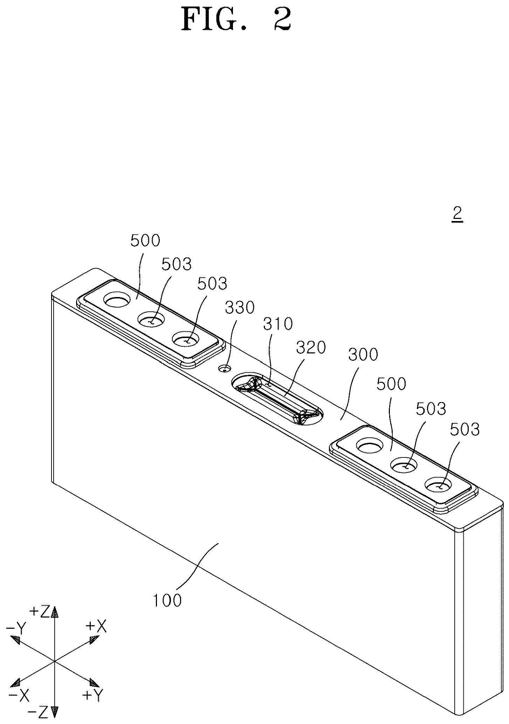

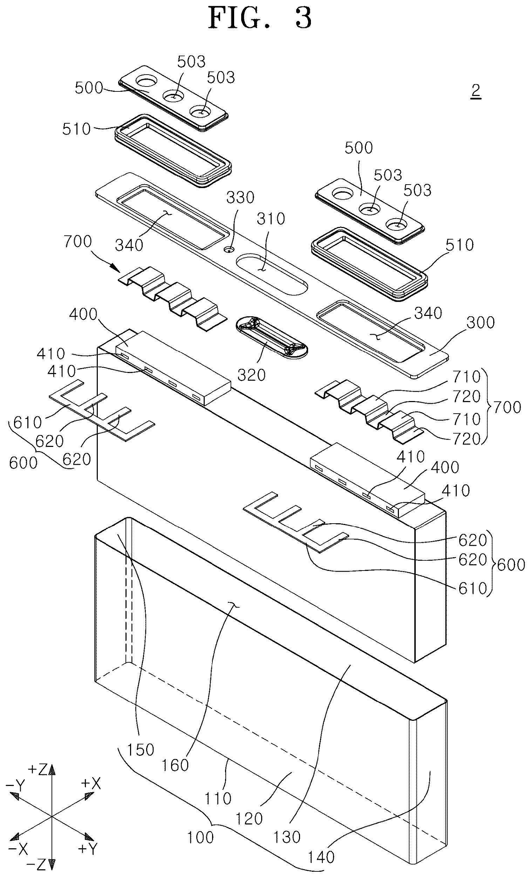

FIG. 2 is a perspective view schematically illustrating a configuration of a secondary battery according to an embodiment of the present invention, and FIG. 3 is an exploded perspective view schematically illustrating the configuration of the secondary battery according to an embodiment of the present invention.

Hereinafter, an example in which the secondary battery is a prismatic lithium-ion secondary battery will be described. However, the secondary battery may be a lithium polymer battery or a cylindrical battery.

A first direction described below may be exemplified as a +Z direction based on FIGS. 2 and 3, a second direction may be exemplified as a +X direction, and a third direction may be exemplified as a +Y direction.

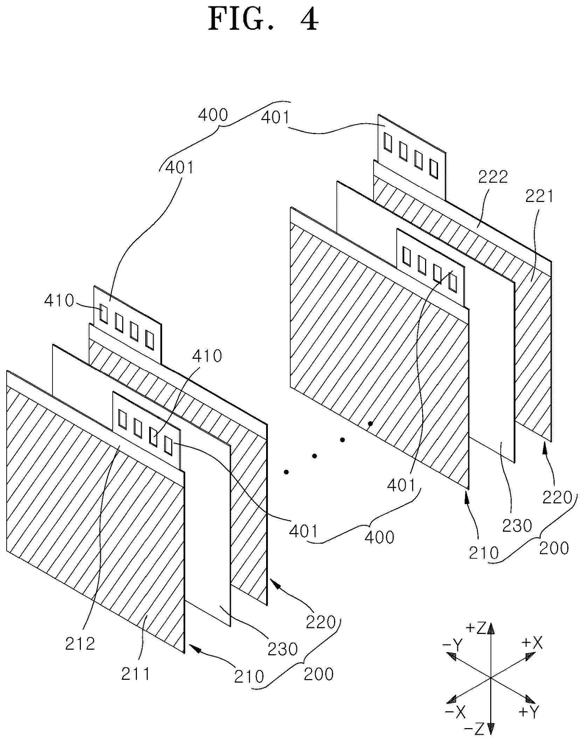

Referring to FIGS. 2 and 3, the secondary battery 2 according to the present embodiment includes a case 100, an electrode assembly 200 (see FIG. 4), a cap plate 300, a tab member 400, a pair of terminals 500, a pair of support plates 600, and a pair of connecting members 700.

The case 100 may form an approximate exterior of the secondary battery 2 and accommodate the electrode assembly 200.

The case 100 according to the present embodiment may include a bottom portion 110, a front surface portion 120, a rear surface portion 130, a first side portion 140, and a second side portion 150.

The bottom portion 110 may form the exterior of a lower side (based on FIG. 3) of the case 100. The bottom portion 110 according to the present embodiment may have the shape of a rectangular plate. The bottom portion 110 may be seated on a bottom surface of the housing body 11.

The front surface portion 120, the rear surface portion 130, the first side portion 140, and the second side portion 150 may form a peripheral outer surface of the case 100.

The front surface portion 120, the rear surface portion 130, the first side portion 140, and the second side portion 150 according to the present embodiment may have the shape of a plate extending from edges of the bottom portion 110 in the first direction. The front surface portion 120, the rear surface portion 130, the first side portion 140, and the second side portion 150 may be disposed to surround an upper space of the bottom portion 110. The front surface portion 120, the rear surface portion 130, the first side portion 140, and the second side portion 150 may be disposed to form a rectangular cross-sectional shape.

The front surface portion 120 and the rear surface portion 130 may be disposed to face each other in the second direction. The front surface portion 120 and the rear surface portion 130 may be disposed parallel to each other. The areas of the front surface portion 120 and the rear surface portion 130 may be the same.

The first side portion 140 and the second side portion 150 may be disposed to face each other in the third direction. The first side portion 140 and the second side portion 150 may be disposed parallel to each other. The areas of the first side portion 140 and the second side portion 150 may be the same. The areas of the first side portion 140 and the second side portion 150 may be smaller than the areas of the front surface portion 120 and the rear surface portion 130.

The case 100 may further include an opening 160. The opening 160 according to the present embodiment may refer to a space surrounded by the upper portions of the front surface portion 120, the rear surface portion 130, the first side portion 140, and the second side portion 150. The opening 160 may be disposed to face the bottom portion 110 in the first direction. The opening 160 may connect the internal space and external space of the case 100 to each other.

The electrode assembly 200 may function as a unit structure that performs charging and discharging operations of electric power in the secondary battery 2. The electrode assembly 200 may be accommodated inside the case 100.

FIG. 4 is a view schematically illustrating a configuration of the electrode assembly according to an embodiment of the present invention.

Referring to FIGS. 2 to 4, the electrode assembly 200 according to the present embodiment may include a first electrode 210, a second electrode 220, and a separator 230 disposed between the first electrode 210 and the second electrode 220. A plurality of the first electrode 210, a plurality of the separator 230, and a plurality of the second electrode 220 may be provided.

Hereinafter, the electrode assembly 200 having a stacked form in which a plurality of the first electrode 210, a plurality of the separator 230, and a plurality of the second electrode 220 are alternately stacked in the second direction will be described as an example. However, the electrode assembly 200 may also be formed to have a shape in which the plurality of the first electrode 210, the plurality of the separator 230, and the plurality of the second electrode 220 are wound clockwise or counterclockwise around a winding axis parallel to the first direction in a state of being stacked.

The first electrode 210 may function as one of a positive electrode and a negative electrode of the electrode assembly 200. Hereinafter, the first electrode 210 will be described as being the positive electrode of the electrode assembly 200 as an example. However, the first electrode 210 may also function as the negative electrode of the electrode assembly 200.

The first electrode 210 according to the present embodiment may be formed to have a shape of a foil including a metal material such as aluminum or an aluminum alloy. The first electrode 210 may vary in type, size, shape, and the like as long as the material is conductive without causing chemical changes in the secondary battery. The design of the cross-sectional shape of the first electrode 210 may be changed to various shapes other than the rectangular shape illustrated in FIG. 4.

A plurality of the first electrode 210 may be provided. The plurality of the first electrode 210 may be arranged in the second direction between the front surface portion 120 and the rear surface portion 130 of the case 100. The number of the plurality of the first electrode 210 may be designed to vary depending on the charging capacity or the like of the secondary battery 2.

A first active material layer 211 may be applied to at least a portion of the first electrode 210. The first active material layer 211 may be applied to both surfaces of the first electrode 210, or in other embodiments, may be applied to only one surface of the first electrode 210.

In the present embodiment, since the first electrode 210 functions as the positive electrode, the first active material layer 211 may include a positive electrode active material.

The positive electrode active material may be a compound capable of reversible intercalation and deintercalation of lithium (a lithiated intercalation compound). More specifically, as the positive electrode active material, one or more of composite oxides of a metal selected from cobalt, manganese, nickel, iron, and a combination thereof and lithium may be used.

As an example, the positive electrode active material may include at least one of lithium-iron-phosphorus oxide (LiFePO₄, LFP), lithium-manganese-iron-phosphorus oxide (LiMnFePO₄, LMFP), and lithium-nickel-cobalt-manganese oxide (LiNixCoyMnzO₂, NCM). Here, 0 < x < 1, 0 < y <1, 0 < z < 1, and x+y+z = 1 may be satisfied. The positive electrode active material may include only one of lithium-iron-phosphorus oxide (LiFePO₄, LFP), lithium-manganese-iron-phosphorus oxide (LiMnFePO₄, LMFP), and lithium-nickel-cobalt-manganese oxide (LiNixCoyMnzO₂, NCM) or may include two or all of lithium-iron-phosphorus oxide (LiFePO₄, LFP), lithium-manganese-iron-phosphorus oxide (LiMnFePO₄, LMFP), and lithium-nickel-cobalt-manganese oxide (LiNixCoyMnzO₂, NCM).

The first active material layer 211 may further include a positive electrode conductive material.

The positive electrode conductive material is used to impart conductivity to the first active material layer 211, and any electronically conductive material that does not cause a chemical change may be used. Examples of the positive electrode conductive material may include carbon materials such as natural graphite, artificial graphite, carbon black, acetylene black, Ketjen black, carbon fibers, carbon nanofibers, and carbon nanotubes, metal materials in the form of a metal powder or metal fibers containing copper, nickel, aluminum, silver, and the like, conductive polymers such as polyphenylene derivatives, or a mixture thereof.

The first active material layer 211 may further include a positive electrode binder.

The positive electrode binder serves to attach the particles constituting the positive electrode active material to each other well, and also attach the positive electrode active material to the first electrode 210 well.

Examples of the positive electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the positive electrode binder, the aqueous binder may further include a cellulose series compound capable of imparting viscosity. As the cellulose series compound, one or more of carboxymethyl cellulose, hydroxypropylmethyl cellulose, methyl cellulose, and an alkali metal salt thereof may be mixed and used. The alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The first electrode 210 may include a first uncoated portion 212 to which the first active material layer 211 is not applied. The first uncoated portion 212 according to the present embodiment may be disposed in an upper end region of the first electrode 210 disposed to face the opening 160 inside the case 100. However, the first uncoated portion 212 may be formed over the entire edge region of the first electrode 210.

The second electrode 220 may function as the other of the positive electrode and the negative electrode of the electrode assembly 200. Hereinafter, the second electrode 220 will be described as being the negative electrode of the electrode assembly 200 as an example. However, the second electrode 220 may also function as the positive electrode of the electrode assembly 200.

A plurality of the second electrode 220 may be provided. The plurality of the second electrode 220 may be arranged in the second direction between the front surface portion 120 and the rear surface portion 130 of the case 100. The first electrode 210 and the second electrode 220 may be alternately disposed (e.g., alternated) in the second direction. The second electrode 220 may be spaced a predetermined interval apart from the first electrode 210 in the second direction.

The second electrode 220 according to the present embodiment may be formed to have a shape of a foil including a metal material such as copper, a copper alloy, nickel, or a nickel alloy. The second electrode 220 may vary in type, size, shape, and the like as long as the material is conductive without causing chemical changes in the secondary battery. The design of the cross-sectional shape of the second electrode 220 may be changed to various shapes other than the rectangular shape illustrated in FIG. 4.

A second active material layer 221 may be applied to at least a portion of the second electrode 220. The second active material layer 221 may be applied to both surfaces of the second electrode 220, or in other embodiments, may be applied to only one surface of the second electrode 220.

As the second electrode 220 functions as the negative electrode, the second active material layer 221 may include a negative electrode active material.

The negative electrode active material may include a material capable of reversible intercalation/deintercalation of lithium ions, a lithium metal, a lithium metal alloy, a material capable of doping and dedoping of lithium, or a transition metal oxide.

The material capable of reversibly intercalating/deintercalating lithium ions may be a carbon negative electrode active material, which may include, for example, crystalline carbon, amorphous carbon, or a combination thereof. Examples of the crystalline carbon may include graphite such as amorphous, plate-like, flake-like, spherical, or fiber-like natural graphite or artificial graphite, and examples of the amorphous carbon may include soft carbon, hard carbon, mesophase pitch carbide, calcined coke, or the like.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping of lithium, a Si negative electrode active material or a Sn negative electrode active material may be used. The Si negative electrode active material may be silicon, a silicon-carbon composite, SiOx (0 < x ≤ 2), a Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn negative electrode active material may be Sn, SnOₓ(0 < x ≤ 2, e.g., SnO₂), a Sn alloy, or a combination thereof.

The silicon-carbon composite may be a composite of silicon and amorphous carbon. According to an embodiment, the silicon-carbon composite may be in the form of silicon particles and amorphous carbon coated on surfaces of the silicon particles. For example, the silicon-carbon composite may include a secondary particle (core) in which primary silicon particles are aggregated and an amorphous carbon coating layer (shell) located on a surface of the secondary particle. The amorphous carbon may be located between the primary silicon particles, for example, so that the primary silicon particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si negative electrode active material or Sn negative electrode active material may be used in combination with a carbon negative electrode active material.

The second active material layer 221 may further include a negative electrode conductive material and a negative electrode binder.

The negative electrode conductive material is used to impart conductivity to the second active material layer 221, and any electronically conductive material that does not cause a chemical change may be used. Examples of the negative electrode conductive material may include carbon materials such as natural graphite, artificial graphite, carbon black, acetylene black, Ketjen black, carbon fibers, carbon nanofibers, and carbon nanotubes, metal materials in the form of a metal powder or metal fibers containing copper, nickel, aluminum, silver, or the like, conductive polymers such as polyphenylene derivatives, or a mixture thereof.

The negative electrode binder serves to well attach particles constituting the negative electrode active material and also serves to well attach the negative electrode active material to the second electrode 220.

Examples of the negative electrode binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, the aqueous binder may further include a cellulose series compound capable of giving viscosity. As the cellulose series compound, one or more of carboxymethyl cellulose, hydroxypropylmethyl cellulose, methyl cellulose, and an alkali metal salt thereof may be mixed and used. The alkali metal may be Na, K, or Li.

The dry binder may be a polymer material capable of being fiberized, for example, polytetrafluoroethylene, polyvinylidene fluoride, a polyvinylidene fluoride-hexafluoropropylene copolymer, polyethylene oxide, or a combination thereof.

The second electrode 220 may include a second uncoated portion 222 to which the second active material layer 221 is not applied. The second uncoated portion 222 according to the present embodiment may be disposed in an upper end region of the second electrode 220 disposed to face the opening 160 inside the case 100. However, the second uncoated portion 222 may be formed over the entire edge region of the second electrode 220.

The separator 230 may be disposed between the first electrode 210 and the second electrode 220. The separator 230 may perform a function of preventing a short circuit between the first electrode 210 and the second electrode 220 while allowing movement of lithium ions between the first electrode 210 and the second electrode 220.

The separator 230 may be disposed to entirely surround a surface region of the electrode assembly 200. Accordingly, the separator 230 may prevent the first electrode 210 and the second electrode 220 from being directly exposed to the outside of the electrode assembly 200.

The separator 230 may be made of polyethylene, polypropylene, polyvinylidene fluoride, or a multilayer film of two or more layers thereof , and a mixed multilayer film such as a two-layer separator of polyethylene/polypropylene, a three-layer separator of polyethylene/polypropylene/polyethylene, or a three-layer separator of polypropylene/polyethylene/polypropylene may be used.

The separator 230 may include a porous substrate and a coating layer including an organic material, an inorganic material, or a combination thereof, which is positioned on one surface or both surfaces of the porous substrate.

The porous substrate may be a polymer film made of one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, Teflon, and polytetrafluoroethylene, or a copolymer or mixture of two or more of the above materials.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO2, Y₂O₃, SrTiO₃, BaTiO₃, Mg(OH)₂, boehmite, and a combination thereof, but may vary.

The organic material and the inorganic material may be mixed in one coating layer or may be in the form of a coating layer including (or containing) an organic material and a coating layer including (or containing) an inorganic material which are stacked on each other.

The cap plate 300 may be coupled to the case 100 and seal the case 100.

The cap plate 300 according to the present embodiment may be formed to have a shape of a flat plate. The cap plate 300 may be disposed in the opening 160 of the case 100. The cap plate 300 may be disposed parallel to the bottom portion 110 of the case 100. The cap plate 300 may be seated on an upper end of the case 100, more specifically, on upper ends of the front surface portion 120, the rear surface portion 130, the first side portion 140, and the second side portion 150. The cap plate 300 may be coupled to the case 100 by various types of coupling methods, such as welding, bolting, fitting, or the like. An inner surface of the cap plate 300 may be disposed to face the electrode assembly 200 in the first direction.

A vent hole 310 and a vent 320 may be formed in the cap plate 300 according to the present embodiment.

The vent hole 310 according to the present embodiment may be formed to have a shape of a hole (e.g., an oval) that vertically passes through both surfaces of the cap plate 300 in the first direction. The vent hole 310 may function as a component that provides a path for flames, gas, smoke, or the like generated inside the case 100 to be discharged to the outside of the case 100 when the secondary battery 2 experiences thermal runaway due to overcurrent or the like. The design of the cross-sectional shape of the vent hole 310 may be changed to various shapes such as an ellipse, a circle, a polygon, or the like.

The vent 320 may be provided in the vent hole 310 and opened and closed in conjunction with changes in the internal pressure of the case 100. That is, the vent 320 may close the vent hole 310 during normal operation of the secondary battery 2 to prevent an electrolyte or the like inside the case 100 from leaking out of the case 100, or moisture, foreign substances, or the like from entering the case 100. The vent 320 may open the vent hole 310 during thermal runaway of the secondary battery 2 to allow flames, gas, smoke, and the like generated inside the case 100 to be discharged to the outside of the case 100.

The vent 320 according to the present embodiment may be formed to have an approximately plate-shaped form. The vent 320 may be fixed to the cap plate 300 by various types of coupling methods such as welding, bolting, fitting, or the like. The vent 320 may be disposed inside the vent hole 310, or may be disposed to face the vent hole 310 in the first direction on the upper or lower side of the cap plate 300.

The thickness of the vent 320 may be smaller than the thickness of the cap plate 300. Accordingly, the vent 320 may easily rupture or break when the internal pressure of the case 100 increases. The vent 320 may include a notch formed concavely on the inside of the vent 320 to be preferentially ruptured when the internal pressure of the case 100 increases.

An electrolyte injection port 330 may be formed in the cap plate 300 according to the present embodiment.

The electrolyte injection port 330 may have the shape of a hole (e.g., a round hole) passing through the cap plate 300 in the first direction. A sealing plug may be installed in the electrolyte injection port 330 to prevent leakage of the electrolyte with which the case 100 is filled. The electrolyte injection port 330 may be disposed spaced a predetermined interval apart from the vent hole 310 in the third direction or in a direction opposite to the third direction.

A pair of terminal holes 340 (or simply one terminal hole) may be formed in the cap plate 300 according to the present embodiment.

Each of the pair of terminal holes 340 according to the present embodiment may have the shape of a hole passing through the cap plate 300 in the first direction. The pair of terminal holes 340 may be disposed spaced apart at a predetermined interval in the third direction. The vent hole 310 and the electrolyte injection port 330 may be disposed between the pair of terminal holes 340.

The tab member 400 may be connected to the electrode assembly 200 and may extend from the electrode assembly 200 in the first direction. The tab member 400 may be disposed between the electrode assembly 200 and the cap plate 300.

A pair of the tab member 400 (e.g., more generally, a plurality of the tab member 400) may be provided. One of the pair of the tab member 400 may be connected to the first electrode 210 of the electrode assembly 200. Among the pair of the tab member 400, the remaining of the tab member 400 may be connected to the second electrode 220 of the electrode assembly 200. Accordingly, the pair of the tab member 400 may function as a positive tab and a negative tab of the secondary battery 2, respectively. The pair of the tab member 400 may be disposed spaced apart at a predetermined interval in the third direction on the electrode assembly 200.

The electrode tabs 401 of the tab member 400 connected to the first electrode 210 of the electrode assembly 200 among the pair of the tab member 400 may have a shape of a foil extending in the first direction from the first uncoated portion 212 of a different one of the first electrode 210. The electrode tabs 401 connected to the first electrode 210 may be stacked in the second direction. Accordingly, the tab member 400 connected to the first electrode 210 of the electrode assembly 200 may be an assembly of the electrode tabs 401 that extend from the first uncoated portion 212 in the first direction and are stacked in the second direction.

Electrode tabs 401 of the tab member 400 connected to the second electrode 220 of the electrode assembly 200 among the pair of the tab member 400 may have a shape of a foil extending from the second uncoated portion 222 of different of the second electrode 220 in the first direction. The electrode tabs 401 connected to the second electrode 220 may be stacked in the second direction. Accordingly, the tab member 400 connected to the second electrode 220 of the electrode assembly 200 may be an assembly of a plurality of electrode tabs 401 that extend from the second uncoated portion 222 in the first direction and are stacked in the second direction.

The pair of terminals 500 may each protrude outward from the cap plate 300 and may each be disposed to face the tab member 400. The pair of terminals 500 may be formed of an electrically conductive material such as aluminum, nickel, copper, or the like. The pair of terminals 500 may be electrically connected to the tab member 400 by the pair of connecting members 700 described below.

The pair of terminals 500 may be spaced apart at a predetermined interval in the third direction on the cap plate 300. The pair of terminals 500 may be individually disposed to face different of the tab member 400. The pair of terminals 500 may be electrically connected to different of the tab member 400, respectively. Accordingly, the pair of terminals 500 may function as a positive terminal and a negative terminal of the secondary battery 2, respectively.

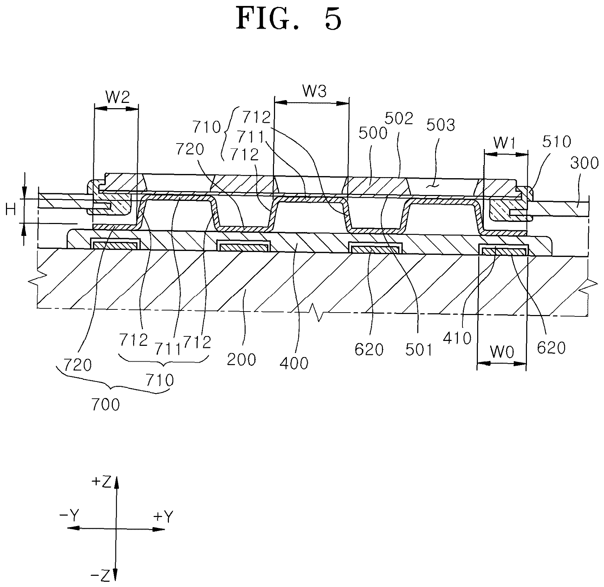

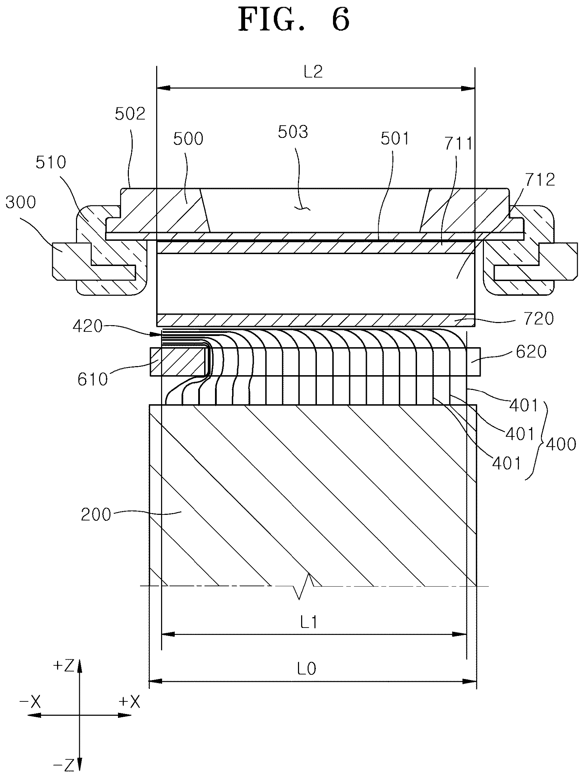

FIG. 5 is a cross-sectional view schematically illustrating the configuration of the terminal, the support plate, and the connecting member according to an embodiment of the present invention, and FIG. 6 is a side cross-sectional view schematically illustrating the configuration of the terminal, the support plate, and the connecting member according to an embodiment of the present invention.

The tab member 400 illustrated in FIGS. 5 and 6 may be the tab member 400 connected to the first electrode 210 among the pair of the tab member 400, or alternatively, may also be the tab member 400 connected to the second electrode 220 among the pair of the tab member 400.

Referring to FIGS. 2 to 6, the pair of terminals 500 according to the present embodiment may be disposed on an outer surface of the cap plate 300 disposed to face the external space of the case 100. The pair of terminals 500 may be disposed to face a pair of terminal holes 340 passing through the cap plate 300. In FIG. 3, the pair of terminals 500 is illustrated as having an approximately rectangular parallelepiped shape as an example, but the design thereof may be changed to various shapes.

Each of the pair of terminals 500 may include a first terminal surface 501 and a second terminal surface 502.

The first terminal surface 501 may be exemplified as a lower surface of each of the pair of terminals 500 facing the tab member 400 through the pair of terminal holes 340. The first terminal surface 501 may be disposed perpendicular to the first direction.

The second terminal surface 502 may be exemplified as an upper surface of the pair of terminals 500 positioned on the opposite side of the first terminal surface 501 and disposed to face the external space of the case 100. The second terminal surface 502 may be disposed perpendicular to the first direction.

A pair of the gasket 510 may be installed between the cap plate 300 and the pair of terminals 500. The pair of the gasket 510 may electrically insulate the cap plate 300 and the pair of terminals 500 and prevent moisture or foreign substances from entering between the cap plate 300 and the pair of terminals 500.

The pair of the gasket 510 may be individually disposed between different terminals 500 and the cap plate 300.

The gasket 510 according to the present embodiment may be disposed in each of the pair of terminal holes 340. An inner surface of each of the gasket 510 may be disposed to surround an outer surface of each of the pair of terminals 500. An outer surface of the gasket 510 may be disposed to surround the inner surface of the cap plate 300 forming the pair of terminal holes 340. The gasket 510 may be formed of an insulating material such as polyethylene (PE), polypropylene (PP), polyethylene terephthalate (PET) rubber, or the like. The pair of the gasket 510 may be fixed between the cap plate 300 and the pair of terminals 500 by pressing, injection, adhesion, or the like.

The pair of support plates 600 may be inserted into the pair of the tab member 400. Each of the pair of support plates 600 may function as a component that structurally supports the pair of the tab member 400 and aligns the shape, position, or the like of the pair of the tab member 400. Accordingly, the pair of support plates 600 may prevent deformation of the pair of the tab member 400 when joining the pair of the tab member 400 and the pair of connecting members 700 described below and improve the joining strength between the pair of the tab member 400 and the pair of connecting members 700.

The pair of support plates 600 may be inserted into the pair of the tab member 400 in the second direction. Accordingly, the pair of support plates 600 may simultaneously support a plurality of electrode tabs 401 (see FIG. 6) stacked in the second direction in the pair of the tab member 400.

The pair of support plates 600 may be individually inserted into different of the pair of the tab member 400.

The pair of support plates 600 may be formed of an electrically conductive material such as copper, nickel, aluminum, or the like.

The secondary battery 2 may comprise a plurality of insertion holes 410. An insertion hole 410 may be formed in each of the pair of the tab member 400 according to the present embodiment.

Each of the insertion hole 410 may have a shape of a hole (e.g., a rectangular shape) passing through the tab member 400 in the second direction. Each of the insertion hole 410 may simultaneously pass through the plurality of electrode tabs 401 stacked in the second direction. The design of the cross-sectional shape of the insertion hole 410 may be changed to various shapes, such as a circle, an ellipse, a polygon, or the like in addition to the rectangular shape shown in FIGS. 3 to 5.

A width WO of each of the insertion hole 410 in the third direction may be 10 mm or more and 15 mm or less. For example, the width WO of each of the insertion hole 410 in the third direction may be 10 mm.

A plurality of the insertion hole 410 may be provided. The plurality of the insertion hole 410 may be arranged at a predetermined interval in the third direction. FIGS. 3 to 5 show that four of the insertion hole 410 are formed by way of example, but the number of insertion holes 410 may be changed to various numbers, such as two, five, or the like.

An interval between a pair of neighboring of the insertion hole 410 in the third direction may be 10 mm or more and 15 mm or less. For example, the interval between the pair of neighboring of the insertion hole 410 in the third direction may be 12 mm.

The number, interval, and the like of each of the plurality of the insertion hole 410 formed in each tab member 400 may be the same.

The pair of support plates 600 according to the present embodiment may include a first support plate 610 and a second support plate 620.

The first support plate 610 may form the exterior of one side of the pair of support plates 600 and support the second support plate 620. The first support plate 610 may be disposed on the outside of the insertion hole 410 (e.g., after insertion thereof).

The first support plate 610 according to the present embodiment may have a shape of a bar extending in the third direction. The first support plate 610 may be disposed to face the tab member 400 in the second direction. The first support plate 610 may be disposed to face one surface of the tab member 400 disposed to face in the opposite direction to the second direction.

Each of the second support plate 620 may extend from the first support plate 610 and may form the exterior of the other side of the pair of support plates 600. The second support plate 620 may be inserted into the insertion hole 410.

The second support plate 620 according to the present embodiment may have a shape of a bar extending from the first support plate 610 in the second direction. The second support plate 620 may be inserted into the insertion hole 410 in the second direction. An end of the second support plate 620 may protrude outward from the other surface of the tab member 400 disposed to face in the second direction through the insertion hole 410.

A width W1 of the second support plate 620 in the third direction may be smaller than the width WO of the insertion hole 410 in the third direction. For example, the width WO of the insertion hole 410 in the third direction may be 10 mm, and the width W1 of the second support plate 620 in the third direction may be 8 mm. Accordingly, the second support plate 620 may be smoothly inserted into the insertion hole 410.

A plurality of the second support plate 620 may be provided. The plurality of the second support plate 620 may be arranged in the third direction. The number of the second support plate 620 may be the same as the number of insertion hole 410. Each second support plate 620 may be individually inserted into a different insertion hole 410.

The tab member 400 according to the present embodiment may further include a bent portion 420.

The bent portion 420 may be bent in a direction intersecting the first direction. Accordingly, the bent portion 420 may improve the joining strength between the tab member 400 and the pair of connecting members 700 by increasing the contact area of the tab member 400 with the pair of connecting members 700 described below.

The bent portion 420 according to the present embodiment may be bent in a direction opposite to a direction of insertion of the second support plate 620 into the insertion hole 410. For example, the bent portion 420 according to the present embodiment may be bent in a direction opposite to the second direction (e.g., the -X-axis direction). The bent portion 420 may be formed by a method of bending an upper region of the electrode tabs 401 extending from the electrode assembly 200 in the first direction in the direction opposite to the second direction.

When the second support plate 620 is fully inserted into the insertion hole 410, the first support plate 610 may be disposed between an upper surface of the electrode assembly 200 and a lower surface of the cap plate 300. That is, the first support plate 610 may be disposed at a position facing the electrode assembly 200 in the first direction.

As the first support plate 610 is disposed to face the electrode assembly 200 in the first direction, the first support plate 610 may press one surface of the tab member 400 disposed to face in the direction opposite to the second direction in the second direction.

Central portions of some electrode tabs 401 disposed adjacent to the first support plate 610 among the plurality of electrode tabs 401 may be deformed and moved toward the second direction by a pressing force of the first support plate 610.

Accordingly, an end of the bent portion 420 does not protrude outward from the electrode assembly 200 and may be disposed at a position facing the upper surface of the electrode assembly 200 in the first direction. For example, a length L1 of the bent portion 420 in the second direction may be smaller than a length L0 of the electrode assembly 200 in the second direction. Accordingly, the secondary battery 2 according to the present embodiment may maintain the length of the bent portion 420 within a certain range, thereby ensuring that all electrode tabs 401 constituting the tab member 400 come into contact with the pair of connecting members 700.

The pair of connecting members 700 may be disposed between the tab member 400 and the pair of terminals 500. The pair of connecting members 700 may electrically connect the tab member 400 and the pair of terminals 500 to each other.

A pair of connecting members 700 may be provided. The connecting members 700 may be disposed spaced apart at a predetermined interval in the third direction. One of the pair of connecting members 700 may connect the tab member 400 connected to the first electrode 210 and the pair of terminals 500 facing the tab member 400 connected to the first electrode 210. The other of the pair of connecting members 700 may connect the tab member 400 connected to the second electrode 220 and the pair of terminals 500 facing the tab member 400 connected to the second electrode 220.

The pair of connecting members 700 according to the present embodiment may include a first connecting plate 710 and a second connecting plate 720.

The first connecting plate 710 may form the exterior of one side of the pair of connecting members 700 and may be connected to the pair of terminals 500. A plurality of the first connecting plate 710 may be provided. The plurality of the first connecting plate 710 may be arranged at a set interval in the third direction. As the pair of connecting members 700 is connected to the pair of terminals 500 at a plurality of points by the plurality of the first connecting plate 710, the secondary battery 2 according to the present embodiment may expand a current conduction path and reduce the amount of generated heat.

The first connecting plate 710 according to the present embodiment may include a terminal connecting portion 711 and an extension portion 712.

The terminal connecting portion 711 may be spaced apart from the tab member 400 and may come into contact with the first terminal surface 501.

The terminal connecting portion 711 according to the present embodiment may have a shape of a flat plate disposed perpendicular to the first direction. The terminal connecting portion 711 may be disposed between the tab member 400 and the pair of terminals 500. One surface of the terminal connecting portion 711 may be spaced apart from the tab member 400, more specifically, the bent portion 420 in the first direction. The other surface of the terminal connecting portion 711 may come into contact with the first terminal surface 501 of the pair of terminals 500.

The terminal connecting portion 711 may be joined to the pair of terminals 500 by laser welding or the like.

The pair of terminals 500 according to the present embodiment may further include a groove 503.

The groove 503 may have a shape of a groove that is concavely formed from the second terminal surface 502 of the pair of terminals 500 toward the first terminal surface 501. The groove 503 may be disposed to face the first connecting plate 710, more specifically, the terminal connecting portion 711 in the first direction. Accordingly, the groove 503 may reduce the thickness of a portion of the pair of terminals 500 that directly faces the terminal connecting portion 711, thereby allowing a joining process between the pair of terminals 500 and the terminal connecting portion 711 to be smoothly performed.

A plurality of the groove 503 may be provided. The plurality of the groove 503 may be arranged in the third direction. Each of the plurality of the groove 503 may be individually disposed to face the terminal connecting portion 711 of a different one of the first connecting plate 710 in the first direction.

The extension portion 712 may extend (e.g., in the first direction) from the terminal connecting portion 711. The extension portion 712 may function as a component that mechanically and electrically connects the terminal connecting portion 711 and the second connecting plate 720 described below.

The extension portion 712 according to the present embodiment may extend from the terminal connecting portion 711 toward the tab member 400. The extension portion 712 may be disposed at an angle with respect to the first direction, or may be disposed parallel to the first direction.

Each of the first connecting plate 710 may include a pair of the extension portion 712. The pair of the extension portion 712 may extend from both ends of the terminal connecting portion 711 disposed to face in the third direction and the direction opposite to the third direction toward the tab member 400.

The second connecting plate 720 may form the exterior of the other side of the pair of connecting members 700 and may be connected to the first connecting plate 710 and the tab member 400. A plurality of second connecting plate 720 may be provided. The plurality of second connecting plate 720 may be arranged at a set interval in the third direction. As the pair of connecting members 700 is connected to the tab member 400 at a plurality of points by the plurality of second connecting plate 720, the secondary battery 2 according to the present embodiment may expand the current conduction path and reduce the amount of generated heat.

The first connecting plate 710 and the second connecting plate 720 may be alternately disposed in the third direction. For example, the number of second connecting plates may be one more than the number of first connecting plates 710. Each of the first connecting plate 710 may be disposed between a pair of second connecting plate 720 adjacently disposed in the third direction.

The second connecting plate 720 according to the present embodiment may have a shape of a flat plate perpendicular to the first direction. The second connecting plate 720 may be disposed between the cap plate 300 and the tab member 400. The second connecting plate 720 may be connected to an end of the extension portion 712 extending from the terminal connecting portion 711.

One surface of the second connecting plate 720 may come into contact with the tab member 400, more specifically, the bent portion 420. The second connecting plate 720 may be disposed to face the second support plate 620 in the first direction with the bent portion 420 interposed therebetween. Each second connecting plate 720 may be individually disposed to face a different second support plate 620 in the first direction.

The second connecting plate 720 may be integrally joined to the bent portion 420 and the second support plate 620 by laser welding or the like.

A length L2 of the second connecting plate 720 in the second direction may be smaller than the length L0 of the electrode assembly 200 in the second direction. Accordingly, the second connecting plate 720 may be prevented from interfering with a component positioned between the electrode assembly 200 and the case 100.

The length L2 of the second connecting plate 720 in the second direction may be greater than the length L1 of the bent portion 420 in the second direction. Accordingly, the second connecting plate 720 may be joined to all of the plurality of electrode tabs 401 constituting the tab member 400, thereby preventing the deterioration in electrical performance due to non-welding of some of the tab member 400.

A width W2 of the second connecting plate 720 in the third direction may be greater than the width W1 of the second support plate 620 in the third direction. For example, the width W2 of the second connecting plate 720 in the third direction may be 8 mm or more. Accordingly, the second support plate 620 may be joined to the second connecting plate 720 over its entire area.

A width W3 of the terminal connecting portion 711 in the third direction may be greater than the width W2 of the second connecting plate 720 in the third direction. Accordingly, the pair of connecting members 700 according to the present embodiment may prevent a contact area between the first connecting plate 710 and the pair of terminals 500 from being excessively reduced compared to a contact area between the second connecting plate 720 and the tab member 400 even when the number of the first connecting plate 710 is less than the number of second connecting plate 720.

The other surface of the second connecting plate 720 may be spaced apart from the cap plate 300 by a predetermined distance in a direction opposite to the first direction. Accordingly, a height of the second connecting plate 720 in the first direction may be lower than a height of the terminal connecting portion 711 of the first connecting plate 710 in the first direction. In the present embodiment, an interval H in the first direction between the terminal connecting portion 711 and the second connecting plate 720 may be 1 mm or more.

Hereinafter, a method of manufacturing the secondary battery 2 according to an embodiment of the present invention will be described.

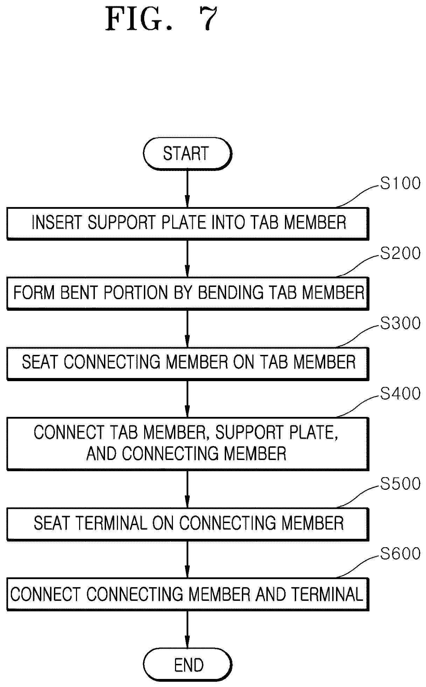

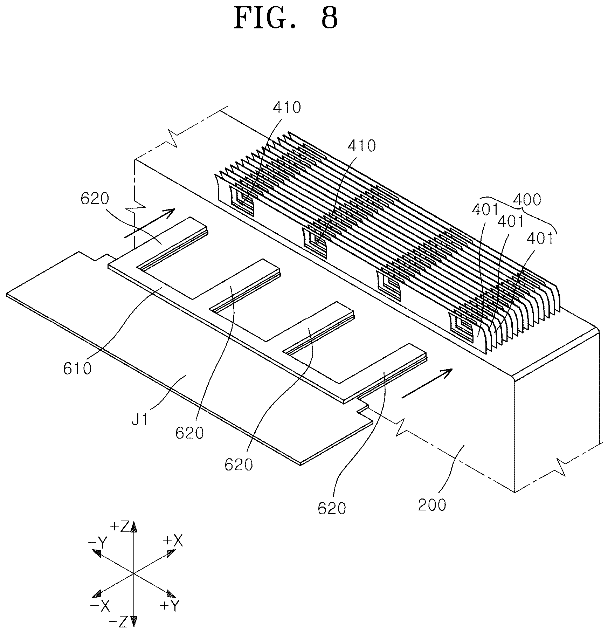

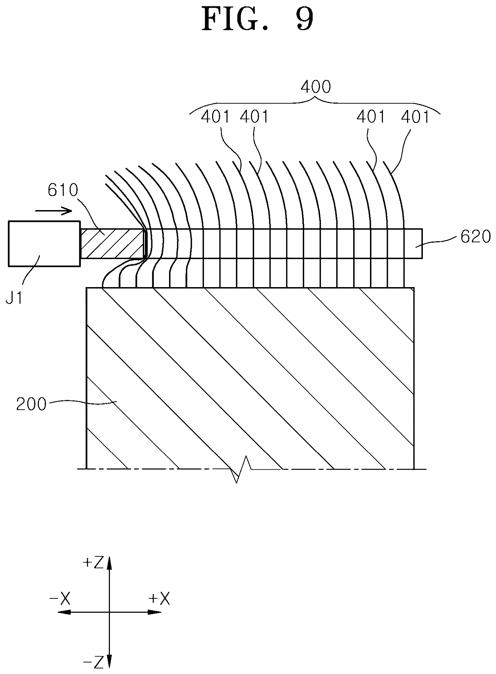

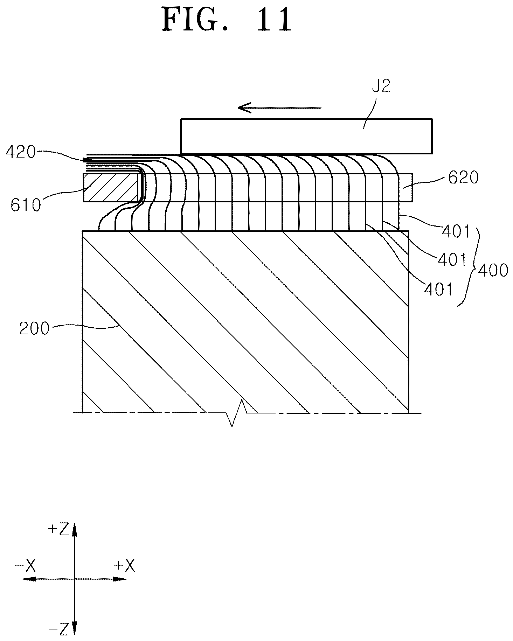

FIG. 7 is a flowchart illustrating the sequence of a method of manufacturing the secondary battery according to an embodiment of the present invention, and FIGS. 8 to 15 are views illustrating a process of manufacturing the secondary battery according to an embodiment of the present invention.

Referring to FIGS. 7, 8, and 9, one of the pair of support plates 600 is inserted into a tab member 400 extending from an electrode assembly 200 in the first direction (S100).

In operation S100, the pair of support plates 600 may be inserted into the tab member 400 in the second direction intersecting the first direction.

For example, operation S100 may be performed by a first jig J1 that is movable on the outside of the electrode assembly 200.

In a state where the pair of support plates 600 are spaced apart from the tab member 400 by a predetermined distance in the direction opposite to the second direction, the first jig J1 may be connected to the first support plate 610.

The first jig J1 may adjust a position of the pair of support plates 600 so that an end of each second support plate 620 faces a different insertion hole 410 in the second direction.

Then, the first jig J1 may move the pair of support plates 600 in the second direction, and the second support plate 620 may be inserted into the insertion hole 410 in the second direction.

The first jig J1 may move the pair of support plates 600 in the second direction until a point in time when the first support plate 610 is disposed to face the upper surface of the electrode assembly 200 in the first direction.

In this process, the first support plate 610 may press the tab member 400 in the second direction, and the central portions of some electrode tabs 401 disposed adjacent to the first support plate 610 may be deformed and moved toward the second direction by the pressing force of the first support plate 610.

Referring to FIGS. 7, 10, and 11, after operation S100, the tab member 400 may be bent to form a bent portion 420 (S200).

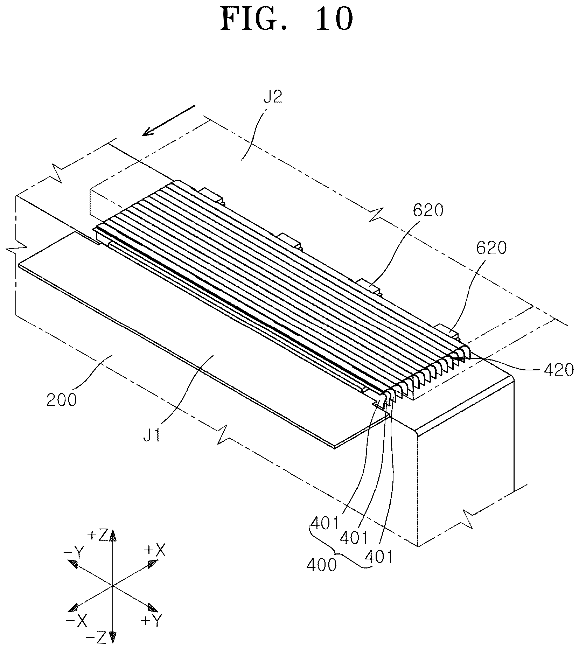

Operation S200 may be performed by a second jig J2 (see FIG. 10) that is spaced apart from the first jig J1 and movable on the outside of the electrode assembly 200.

The second jig J2 may be disposed to face the other surface of the tab member 400 disposed to face in the second direction at a higher position than the insertion hole 410.

As the second jig J2 is moved in a direction opposite to the second direction, the second jig J2 may press an upper region of the tab member 400 positioned on an upper side of the insertion hole 410 in a direction opposite to the second direction.

The upper region of the tab member 400 may be bent in the direction opposite to the second direction by the pressing force of the second jig J2, thereby forming the bent portion 420.

As the first support plate 610 is disposed to face the upper surface of the electrode assembly 200 in the first direction, an end of the bent portion 420 may be disposed to face the upper surface of the electrode assembly 200 in the first direction without protruding outward from the electrode assembly 200.

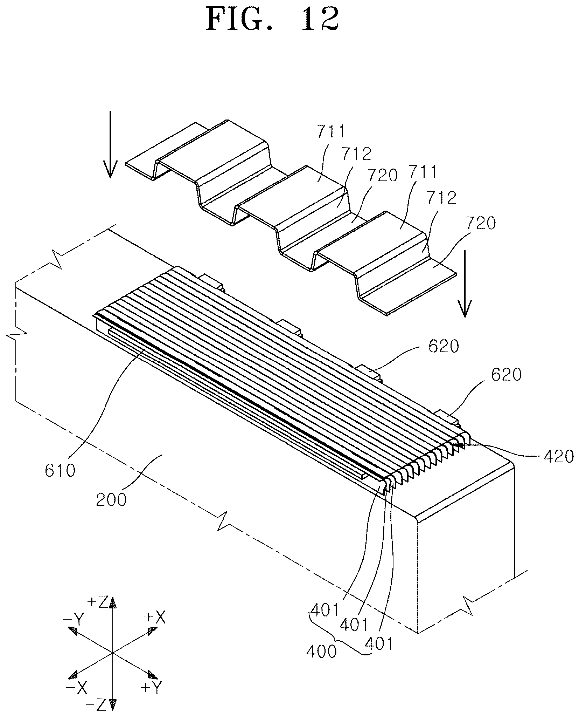

Referring to FIGS. 7 and 12, one of the pair of connecting members 700 is seated on the tab member 400 (S300).

In operation S300, the pair of connecting members 700 may be moved in the direction opposite to the first direction toward the tab member 400 in a state of being spaced apart from the tab member 400 in the first direction.

Operation S300 may be performed until a point in time when the second connecting plate 720 of the pair of connecting members 700 comes into contact with the bent portion 420 of the tab member 400.

In operation S300, each second connecting plate 720 may be disposed to face a different second support plate 620 in the first direction with the bent portion 420 therebetween.

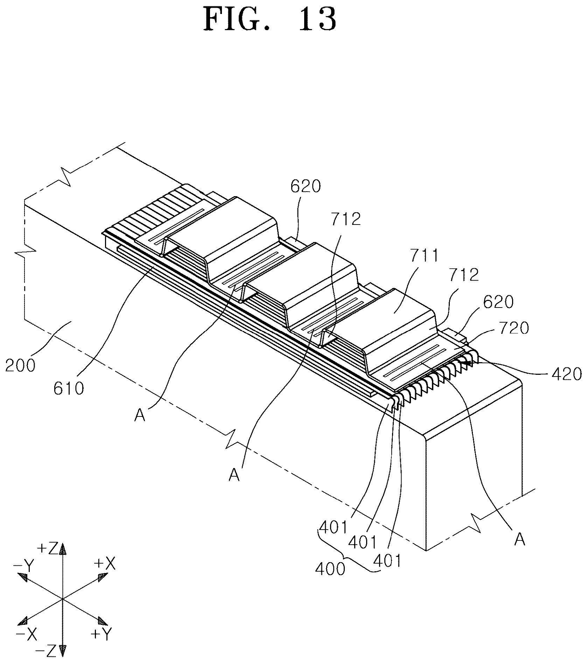

Referring to FIGS. 7 and 13, the tab member 400, the pair of support plates 600, and the pair of connecting members 700 are connected (S400).

Operation S400 may be performed by a method of joining the tab member 400, the second support plate 620, and the second connecting plate 720 by laser welding.

A laser welder may emit a laser beam toward an upper surface of the second connecting plate 720, and the second connecting plate 720, the tab member 400, and the second support plate 620 may be melted and mixed by the laser beam to form a first welding line A (see FIG. 13).

Then, as the first welding line A is hardened, the tab member 400, the second support plate 620, and the second connecting plate 720 may be mechanically and electrically connected.

Operation S400 may be performed at least once for each second connecting plate 720.

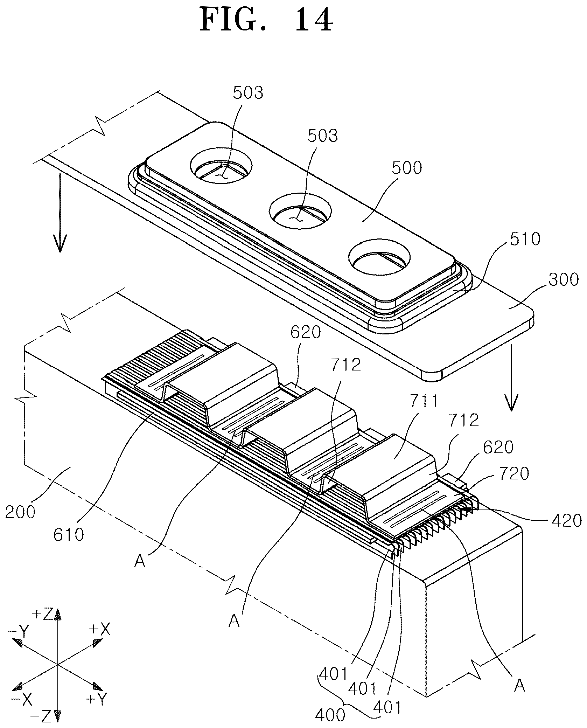

Referring to FIGS. 7 and 14, a pair of terminals 500 is seated on the pair of connecting members 700 (S500).

In operation S500, the pair of terminals 500 may be moved in the direction opposite to the first direction toward the pair of connecting members 700 in a state of being spaced apart from the pair of connecting members 700 in the first direction.

In FIG. 14, the pair of terminals 500 is illustrated as being moved toward the pair of connecting members 700 in a state of being connected to the cap plate 300 as an example, but in other embodiments, in operation S500, the pair of terminals 500 may also be moved toward the pair of connecting members 700 in a state of being separated from the cap plate 300.

Operation S500 may be performed until a point in time when the first terminal surface 501 of the pair of terminals 500 comes into contact with a terminal connecting portion 711 of the pair of connecting members 700.

In operation S500, each groove 503 may be disposed to face the terminal connecting portion 711 in the first direction.

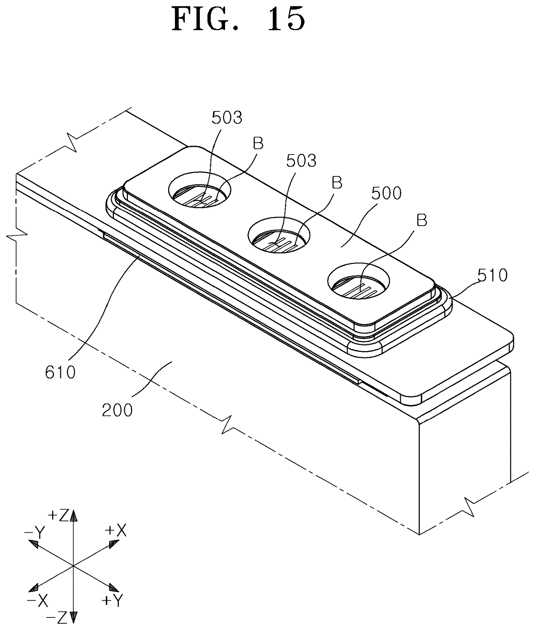

Referring to FIGS. 7 and 15, the pair of connecting members 700 and the pair of terminals 500 are connected (S600).

Operation S600 may be performed by a method of joining the pair of terminals 500 and the terminal connecting portion 711 by laser welding.

The laser welder may emit a laser beam toward a bottom surface of the groove 503, and the pair of terminals 500 and the terminal connecting portion 711 are melted and mixed by the laser beam to form a second welding line B (see FIG. 15).

Then, as the second welding line B is hardened, the pair of terminals 500 and the terminal connecting portion 711 may be mechanically and electrically connected.

Operation S600 may be performed at least once for each groove 503.

The above-described process may be performed sequentially for a pair of the tab member 400, the pair of terminals 500, the pair of support plates 600, and the pair of connecting members 700, or may be simultaneously performed.

Hereinafter, a method of manufacturing a secondary battery 2 according to another embodiment of the present invention will be described.

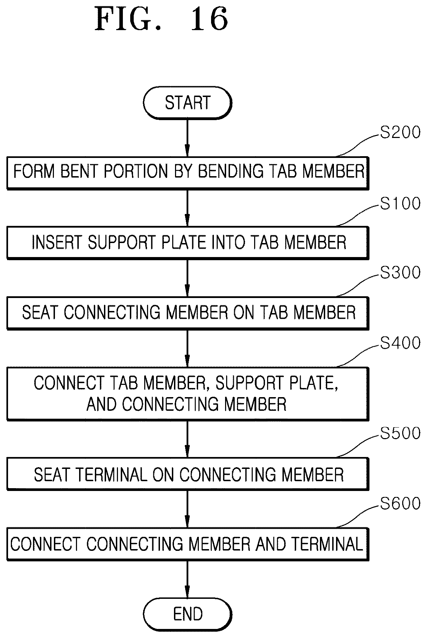

FIG. 16 is a flowchart schematically illustrating a modified example of the method of manufacturing the secondary battery illustrated in FIG. 7;

Referring to FIG. 16, operation S200 may be performed before operation S100.

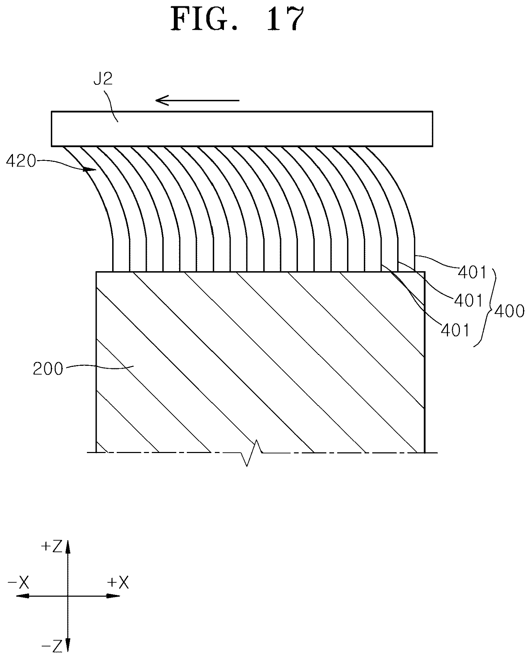

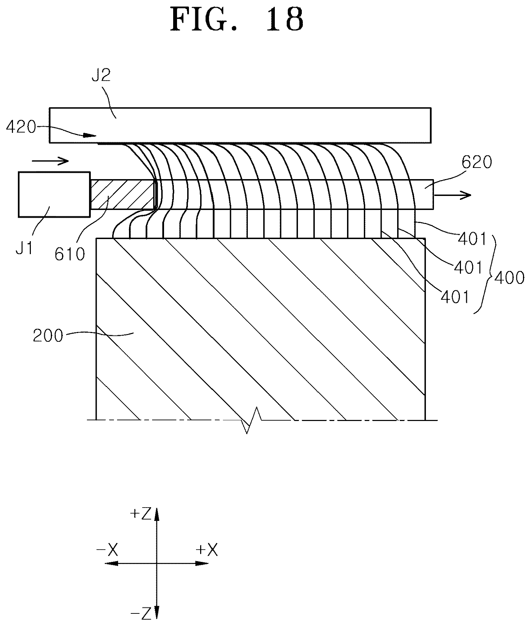

FIGS. 17 and 18 are views schematically illustrating a process of the method of manufacturing the secondary battery illustrated in FIG. 16.

Referring to FIG. 17, first, the tab member 400 may be bent to form the bent portion 420 in a state where the pair of support plates 600 are not inserted into the tab member 400 (S200).

The second jig J2 may be disposed to face the other surface of the tab member 400 disposed to face in the second direction at a higher position than the insertion hole 410.

As the second jig J2 is moved in a direction opposite to the second direction, the second jig J2 may press the upper region of the tab member 400 positioned on an upper side of the insertion hole 410 in a direction opposite to the second direction.

The upper region of the tab member 400 may be bent in the direction opposite to the second direction by the pressing force of the second jig J2, thereby forming the bent portion 420.

In this process, the end of the bent portion 420 may not be disposed to face the electrode assembly 200 in the first direction, but may protrude outward from the electrode assembly 200.

Referring to FIG. 18, after the bent portion 420 is formed, the pair of support plates 600 may be inserted into the tab member 400 in the second direction intersecting the first direction (S100).

In a state where the pair of support plates 600 is spaced apart from the tab member 400 by a predetermined distance in the direction opposite to the second direction, the first jig J1 may be connected to the first support plate 610.

The first jig J1 may adjust the position of the pair of support plates 600 so that the end of each second support plate 620 faces a different insertion hole 410 in the second direction.

Then, the first jig J1 may move the pair of support plates 600 in the second direction, and the second support plate 620 may be inserted into the insertion hole 410 in the second direction.

The first jig J1 may move the pair of support plates 600 in the second direction until a point in time when the first support plate 610 is disposed to face the upper surface of the electrode assembly 200 in the first direction.

In this process, the first support plate 610 may press the tab member 400 in the second direction, and the central portions of some electrode tabs 401 disposed adjacent to the first support plate 610 may be deformed and moved toward the second direction by the pressing force of the first support plate 610.

Accordingly, the end of the bent portion 420 protruding outward from the electrode assembly 200 may be moved in the second direction and disposed to face the electrode assembly 200 in the first direction.

Then, operations S300 to S600 may be performed in the same manner as operations S300 to S600 described in FIGS. 7 to 15.

Hereinafter, a secondary battery 2 according to another embodiment of the present invention will be described.

The secondary battery 2 according to the present embodiment may be configured to differ from the secondary battery 2 according to an embodiment of the present invention only in the detailed configuration of the terminal connecting portion 711.

Accordingly, when describing the secondary battery 2 according to the present embodiment, only the detailed configuration of the terminal connecting portion 711 different from the secondary battery 2 according to an embodiment of the present invention will be described.

The description of the secondary battery 2 according to the present embodiment may be applied to the remaining components of the secondary battery 2 according to the present embodiment as it is.

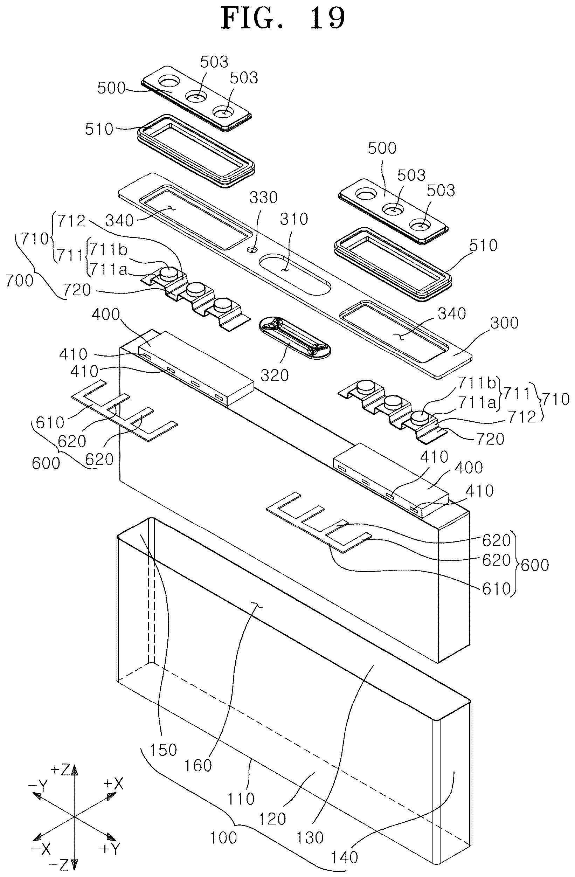

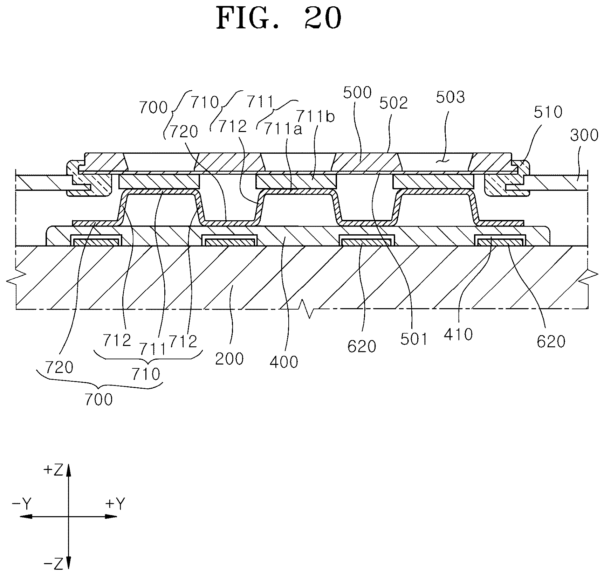

FIG. 19 is an exploded perspective view schematically illustrating a configuration of a secondary battery according to another embodiment of the present invention and FIG. 20 is a cross-sectional view schematically illustrating the configuration of the secondary battery according to another embodiment of the present invention.

Referring to FIGS. 19 and 20, a terminal connecting portion 711 according to the present embodiment may include a first terminal connecting portion 711a and a second terminal connecting portion 711b.

The first terminal connecting portion 711a may form the exterior of one side of the terminal connecting portion 711, and may be spaced apart from a first terminal surface 501 of one of the pair of terminals 500.

The first terminal connecting portion 711a according to the present embodiment may have a shape of a flat plate disposed perpendicular to the first direction. The first terminal connecting portion 711a may be disposed between the tab member 400 and the pair of terminals 500. One surface of the first terminal connecting portion 711a may be spaced apart from the tab member 400, more specifically, the bent portion 420 in the first direction. The other surface of the first terminal connecting portion 711a may be spaced apart from the first terminal surface 501 of the pair of terminals 500 in the direction opposite to the first direction.

The extension portion 712 according to the present embodiment may extend from the first terminal connecting portion 711a toward the tab member 400. The first terminal connecting portion 711a may be disposed at an angle with respect to the first direction, or may be disposed parallel to the first direction.

A pair of the extension portion 712 may be connected to each first terminal connecting portion 711a. The pair of the extension portion 712 may extend from both ends of the first terminal connecting portion 711a disposed to face in the third direction and the direction opposite to the third direction toward the tab member 400.

The second terminal connecting portion 711b may form the exterior of the other side of the terminal connecting portion 711 and may be disposed between the first terminal connecting portion 711a and the first terminal surface 501.

The second terminal connecting portion 711b according to the present embodiment may have a cylindrical shape with its central axis disposed parallel to the first direction. Both surfaces of the second terminal connecting portion 711b may come into contact with the first terminal surface 501 and the first terminal connecting portion 711a, respectively. The second terminal connecting portion 711b may be integrally joined to the first terminal surface 501 and the first terminal connecting portion 711a by laser welding.

The cross-sectional area of the second terminal connecting portion 711b perpendicular to the first direction may be greater than the cross-sectional area of the first terminal connecting portion 711a perpendicular to the first direction. Accordingly, the terminal connecting portion 711 according to the present embodiment may come into contact with the pair of terminals 500 over a wider area to lower the electrical resistance and reduce the amount of generated heat.

According to the present invention, by preventing a portion of a tab member from not being joined to a connecting member by a support plate, it is possible to reduce the number of tab members and improve the power efficiency of a secondary battery.

According to the present invention, by increasing an electrical connection path between a connecting member and a tab member and the connecting member and a terminal, it is possible to lower the resistance of a secondary battery and reduce the amount of generated heat.

However, the effects obtainable through the present invention are not limited to the above effects, and other technical effects that are not mentioned will be clearly understood by those skilled in the art from the following description of the present invention.

## Claims

1. Secondary battery (2), comprising:
a case (100);
an electrode assembly (200) inside the case (100);
a cap plate (300) coupled to the case (100), the cap plate (300) sealing the case (100);
a tab member (400) extending from the electrode assembly (200) in a first direction;
a terminal (500) protruding outward from the cap plate (300), the terminal (500) facing the tab member (400);
a support plate (600) in the tab member (400) in a second direction intersecting the first direction; and
a connecting member (700) between the tab member (400) and the terminal (500), the connecting member (700) connecting the tab member (400) and the terminal (500).

2. Secondary battery (2) according to claim 1, further comprising a plurality of insertion holes (410) passing through the tab member (400) in the second direction,
wherein the support plate (600) comprises:
a first support plate (610) on an outside of the plurality of insertion holes (410); and
a plurality of second support plates (620) extending from the first support plate (610), the plurality of second support plates (620) being in the insertion holes (410).

3. Secondary battery (2) according to claim 2, wherein the first support plate (610) is between the electrode assembly (200) and the cap plate (300).

4. Secondary battery (2) according to claim 2 or 3, wherein the tab member (400) comprises:
a bent portion (420) bent in a direction opposite to the second direction, and
the first support plate (610) and an end of the bent portion (420) both face the electrode assembly (200) in the first direction.

5. Secondary battery (2) according to any of claims 2 to 4, wherein the plurality of insertion holes (410) and the plurality of second support plates (620) are in a third direction intersecting the first direction and the second direction.

6. Secondary battery (2) according to any of claims 1 to 5, wherein the connecting member (700) comprises:
a plurality of first connecting plates (710) connected to the terminal (500); and
a plurality of second connecting plates (720) connected to the plurality of first connecting plates (710) and the tab member (400).

7. Secondary battery (2) according to claim 6, wherein the terminal (500) comprises a first terminal surface (501) facing the tab member (400) and a second terminal surface (502) opposite to the first terminal surface (501), and
each of the plurality of first connecting plates (710) comprises:
a terminal connecting portion (711) spaced apart from the tab member (400), the terminal connecting portion (711) being in contact with the first terminal surface (501) of the terminal (500); and
an extension portion (712) extending from the terminal connecting portion (711), the extension portion (712) being connected to one of the plurality of second connecting plates (720).

8. Secondary battery (2) according to claim 7, wherein the terminal connecting portion (711) comprises:
a first terminal connecting portion (711a) spaced apart from the first terminal surface (501) of the terminal (500); and
a second terminal connecting portion (711b) between the first terminal connecting portion (711a) and the first terminal surface (501) of the terminal (500), the second terminal connecting portion (711b) being in contact with the first terminal surface (501) of the terminal (500).

9. Secondary battery (2) according to any of claims 6 to 8, wherein the plurality of second connecting plates (720) is between the cap plate (300) and the tab member (400), the plurality of second connecting plates (720) being in contact with the tab member (400).

10. Secondary battery (2) according to any of claims 6 to 9, wherein the terminal comprises:
a first terminal surface (501) facing the tab member (400);
a second terminal surface (502) opposite to the first terminal surface (501); and
a plurality of grooves (503) concavely shaped from the second terminal surface (502) toward the first terminal surface (501).

11. Secondary battery (2) manufacturing method, comprising:
inserting a support plate (600) into a tab member (400) extending from an electrode assembly (200) in a first direction;
seating a connecting member (700) on the tab member (400);
connecting the tab member (400), the support plate (600), and the connecting member (700);
seating a terminal (500) on the connecting member (700); and
connecting the connecting member (700) and the terminal (500).

12. Secondary battery (2) manufacturing method according to claim 11, further comprising, before or after inserting the support plate (600) into the tab member (400), forming a bent portion (420) by bending the tab member (400).

13. Secondary battery (2) manufacturing method according to claim 12, wherein:
in inserting the support plate (600) into the tab member (400), the support plate (600) is inserted into the tab member (400) in a second direction intersecting the first direction, and
in forming the bent portion (420) by bending the tab member (400), the tab member (400) is bent in a direction opposite to the second direction.

14. Secondary battery (2) manufacturing method according to claim 12 or 13, wherein after inserting the support plate (600) into the tab member (400) and forming the bent portion (420) by bending the tab member (400), an end of the bent portion (420) is disposed to face the electrode assembly (200) in the first direction.

15. Battery module, comprising:
a housing; and
a plurality of secondary batteries (2) disposed inside the housing,
wherein each of the plurality of secondary batteries (2) comprises:
a case (100);
an electrode assembly (200) inside the case (100);
a cap plate (300) coupled to the case (100), the cap plate (300) sealing the case (100);
a tab member (400) extending from the electrode assembly (200) in a first direction;
a terminal (500) protruding outward from the cap plate (300), the terminal (500) facing the tab member (400);
a support plate (600) in the tab member (400) in a second direction intersecting the first direction; and
a connecting member (700) between the tab member (400) and the terminal (500), the connecting member (700) connecting the tab member (400) and the terminal (500).
